# EUROPEAN PATENT APPLICATION

(11) **EP 4 838 078 A1**
(43) Date of publication of application: **11.11.2026**
(21) Application number: 26171520.5
(22) Date of filing: 09.04.2026
(51) Int. Cl.: F02K 5/00, F01D 15/10, F02C 7/18, F02C 9/16

(54) **HYBRID ENGINE SYSTEM INCLUDING A TURBINE ENGINE AND AN ELECTRICAL POWER GENERATOR**

(30) Priority: 07.05.2025 US 202519201451
(71) Applicant: General Electric Company, Evendale, OH 45215 (US)
(72) Inventor: RAMBO, Jeffrey, Evendale, 45215 (US); EDENS, Scott, Evendale, 45215 (US); SIBBACH, Arthur, Lynn, 01910 (US)
(74) Representative: Openshaw & Co.

(57) **Abstract**

A hybrid engine system (9, 11, 13, 15) includes a primary duct (50), a turbine engine (10) disposed within the primary duct (50), an electrical power generator (102, 103), and a thermal management system (200, 300, 400, 500). The turbine engine (10) includes a fan section (14), a compressor section (21), a combustion section (26), and a turbine section (27) having a shaft (34, 36) coupled to the compressor section (21). The electrical power generator (102, 103) is mechanically coupled to the shaft (34, 36) and configured to convert at least a portion of mechanical power generated by the turbine engine (10) into electrical power. The thermal management system (200, 300, 400, 500) includes an auxiliary flow duct (202, 302, 402, 502) fluidly coupled to the primary duct (50) to receive a flow of air from the primary duct (50) and a heat exchanger (220, 420) disposed in the auxiliary flow duct (202, 302, 402, 502) for cooling the flow of air from the primary duct (50). The auxiliary flow duct (202, 302, 402, 502) is positioned radially outward of the primary duct (50).

## Description

### TECHNICAL FIELD

The present disclosure relates generally to a hybrid engine system including a turbine engine and an electrical power generator.

### BACKGROUND

A hybrid engine system having a turbo-electric convertible engine architecture includes a turbine engine and an electrical power generator. The hybrid engine system can operate in a thrust mode and a power generation mode. The power generation mode can be used during STOVL (short takeoff vertical landing) or VTOL (vertical takeoff and landing) takeoff and landing operations. During such operations, the hybrid engine system reduces forward thrust of the turbine engine and supplies electric power to lift fans or other devices to create vertical lift. When in the power generation mode, the electrical power generator generates waste heat and rejects the waste heat into a bypass airflow passage where the waste heat mixes with the exhaust of the turbine engine.

### BRIEF DESCRIPTION OF THE DRAWINGS

Features and advantages will be apparent from the following, more particular, description of various illustrative embodiments, as illustrated in the accompanying drawings, wherein like reference numbers generally indicate identical, functionally similar, and/or structurally similar elements.
FIG. 1 is a schematic, cross-sectional diagram of a hybrid engine system, taken along a longitudinal centerline axis of the hybrid engine system, including a turbine engine, an electrical power generator, and an auxiliary flow duct, according to the present disclosure.
FIG. 2 is a schematic, cross-sectional diagram of a hybrid engine system, taken along a longitudinal centerline axis of the hybrid engine system, including a turbine engine, an electrical power generator, and an auxiliary flow duct, according to another embodiment.
FIG. 3 is a schematic, cross-sectional diagram of a hybrid engine system, taken along a longitudinal centerline axis of the hybrid engine system, including a turbine engine, an electrical power generator, and an auxiliary flow duct, according to another embodiment.
FIG. 4 is a schematic, cross-sectional diagram of a hybrid engine system, taken along a longitudinal centerline axis of the hybrid engine system, including a turbine engine, an electrical power generator, and an auxiliary flow duct, according to another embodiment.
FIG. 5 is a cross-sectional view of a hybrid engine system, taken along line 5-5 of FIG. 1, according to an aspect of the present disclosure.

### DETAILED DESCRIPTION

Features, advantages, and embodiments of the present disclosure are set forth or apparent from a consideration of the following detailed description, drawings, and claims. Moreover, both the foregoing summary of the present disclosure and the following detailed description are illustrative and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle. More particularly, forward and aft are used herein with reference to a direction of travel of the vehicle and a direction of propulsive thrust of the gas turbine engine.

The terms "low" and "high," or their respective comparative degrees (e.g., "lower" and "higher," where applicable), when used with the compressor, turbine, shaft, or spool components, each refers to relative pressures and/or relative speeds within an engine unless otherwise specified. For example, a "low-speed" component defines a component configured to operate at a rotational speed, such as a maximum allowable rotational speed, which is lower than that of a "high-speed" component of the engine. Alternatively, unless otherwise specified, the aforementioned terms may be understood in their superlative degree. For example, a "low-pressure turbine" may refer to the lowest maximum pressure within a turbine section, and a "high-pressure turbine" may refer to the highest maximum pressure within the turbine section. The terms "low" or "high" in such aforementioned regards may additionally, or alternatively, be understood as relative to minimum allowable speeds and/or pressures, or minimum or maximum allowable speeds and/or pressures relative to normal, desired, steady state, etc., operation of the engine.

The terms "coupled," "connected," and the like, refer to both direct coupling or connecting, as well as indirect coupling or connecting, through one or more intermediate components or features, unless otherwise specified herein.

The singular forms "a," "an," and "the" include plural references unless the context clearly dictates otherwise.

As used herein, the term "axial" refers to directions and orientations that extend substantially parallel to a longitudinal centerline of the turbine engine. Moreover, the terms "radial" and "radially" refer to directions and orientations that extend substantially perpendicular to the longitudinal centerline axis of the turbine engine. In addition, as used herein, the term "circumferentially" refers to directions and orientations that extend arcuately about the longitudinal centerline axis of the turbine engine.

The present disclosure provides a hybrid engine system having a turbo-electric convertible engine architecture including a turbine engine and an electrical power generator. The hybrid engine system can operate in various operation modes, including a thrust mode and a power generation mode. The power generation mode can be used during STOVL or VTOL takeoff and landing operations. During such operations, the hybrid engine system reduces forward thrust of the turbine engine and supplies electric power to lift fans or other devices to create vertical lift. When in the power generation mode, the electrical power generator generates waste heat. Some current turbine engines include a heat exchanger for providing cooling air to the electrical power generator to absorb the waste heat. Such hybrid engine systems can include a turbine engine disposed within a duct having a duct wall that circumferentially surrounds the turbine engine, with the heat exchanger being located in the duct. The ducts are, however, not necessarily designed to house the heat exchanger. Placing the heat exchanger in the duct compromises available forward thrust and engine efficiency when operating in the thrust mode and requires modifications to existing duct structures, leading to increased manufacturing complexities and costs.

Accordingly, the present disclosure provides a thermal management system for a hybrid engine system including an auxiliary flow duct, also referred to as a parallel flow duct, fluidly coupled to the duct, also referred to as a primary duct. The auxiliary flow duct is positioned radially outward of the primary duct. In particular, the auxiliary flow duct is external to the primary duct and separate from the primary duct. The auxiliary flow duct being positioned radially outward of the primary duct reduces the modifications needed to existing primary duct structures to accommodate the heat exchanger. Additionally, the auxiliary flow duct can direct bypass air away from the bypass airflow passage, reducing forward thrust during STOVL or VTOL takeoff and landing operations and cooling the bypass air.

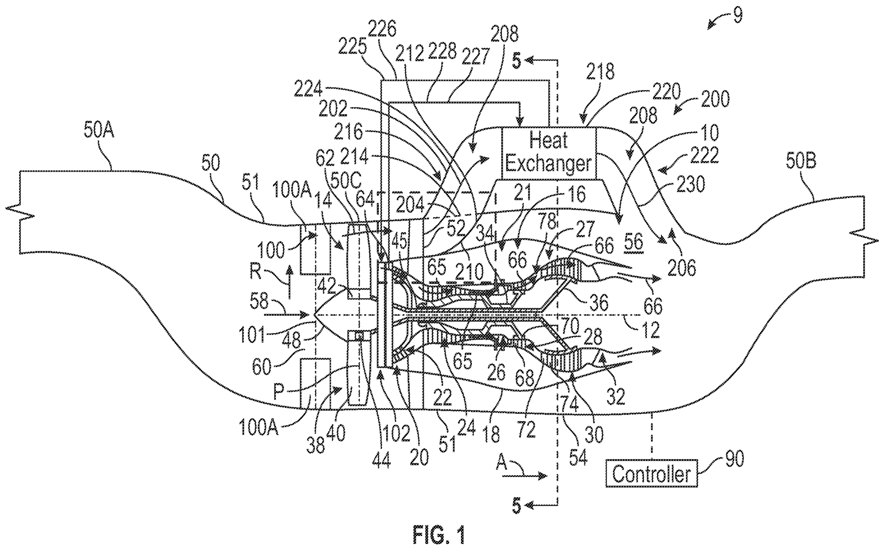

Referring now to the drawings, FIG. 1 is a schematic, cross-sectional diagram of a hybrid engine system 9, taken at a longitudinal centerline axis 12 of the hybrid engine system 9, including a turbine engine 10 and an electrical power generator 102, according to the present disclosure. As shown in FIG. 1, the turbine engine 10 of the hybrid engine system 9 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 includes, in serial flow relationship, a compressor section 21, a combustion section 26, and a turbine section 27. The turbo-engine 16 is substantially enclosed within an outer casing 18 that is substantially tubular and defines a core inlet 20 that is annular about the longitudinal centerline axis 12. As schematically shown in FIG. 1, the compressor section 21 includes a booster or a low pressure (LP) compressor 22 followed downstream by a high pressure (HP) compressor 24. The combustion section 26 is downstream of the compressor section 21. The turbine section 27 is downstream of the combustion section 26 and includes a high pressure (HP) turbine 28 followed downstream by a low pressure (LP) turbine 30. The turbo-engine 16 further includes a jet exhaust nozzle section 32 that is downstream of the turbine section 27, a high-pressure (HP) shaft 34 or a spool, and a low-pressure (LP) shaft 36. The HP shaft 34 drivingly connects the HP turbine 28 to the HP compressor 24. The HP turbine 28 and the HP compressor 24 rotate in unison through the HP shaft 34. The LP shaft 36 drivingly connects the LP turbine 30 to the LP compressor 22. The LP turbine 30 and the LP compressor 22 rotate in unison through the LP shaft 36. The compressor section 21, the combustion section 26, the turbine section 27, and the jet exhaust nozzle section 32 together define a core air flow path.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. In the case of a variable pitch fan, the plurality of fan blades 40 are rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36.

Referring still to the illustrative embodiment of FIG. 1, the disk 42 is covered by a fan hub 48 that is aerodynamically contoured to promote an airflow through the plurality of fan blades 40. In addition, the fan section 14 includes an annular fan casing or a primary duct 50 having a duct wall 51 that circumferentially surrounds the fan 38 and at least a portion of the turbo-engine 16. The primary duct 50 is supported relative to the turbo-engine 16 by a plurality of outlet guide vanes 52 that are circumferentially spaced about the primary duct 50 and the turbo-engine 16. The primary duct 50 has an upstream duct portion 50A, a downstream duct portion 50B, and a mid-stream duct portion 50C located between the upstream duct portion 50A and the downstream duct portion 50B. Moreover, a downstream section 54 of the primary duct 50 extends over an outer portion of the turbo-engine 16. The fan section 14 is located within the mid-stream duct portion 50C. The mid-stream duct portion 50C of the primary duct 50 and the outer casing 18 define a bypass airflow passage 56 therebetween.

During operation of the turbine engine 10, a volume of air 58 enters the turbine engine 10 through a variable inlet 60. At least a portion of the volume of air 58, also referred to as core air 64, is routed into the upstream section of the core air flow path through the core inlet 20 of the LP compressor 22. The pressure of the core air 64 is then increased, generating compressed air 65. The compressed air 65 is routed through the HP compressor 24 and into the combustion section 26, where the compressed air 65 is mixed with fuel and ignited to generate combustion gases 66.

The combustion gases 66 are routed into the HP turbine 28 and expanded through the HP turbine 28 where a portion of thermal energy or kinetic energy from the combustion gases 66 is extracted via one or more stages of HP turbine stator vanes 68 and HP turbine rotor blades 70 that are coupled to the HP shaft 34. This causes the HP shaft 34 to rotate, supporting operation of the HP compressor 24 (self-sustaining cycle). In this way, the combustion gases 66 do work on the HP turbine 28. The combustion gases 66 are then routed into the LP turbine 30 and expanded through the LP turbine 30. Here, a second portion of the thermal energy or the kinetic energy is extracted from the combustion gases 66 via one or more stages of LP turbine stator vanes 72 and LP turbine rotor blades 74 that are coupled to the LP shaft 36. This causes the LP shaft 36 to rotate, supporting operation of the LP compressor 22 (self-sustaining cycle) and rotation of the fan 38. In this way, the combustion gases 66 do work on the LP turbine 30.

The combustion gases 66 are subsequently routed through the jet exhaust nozzle section 32 of the turbo-engine 16 to provide propulsive thrust. Simultaneously, airflow 62 is routed through the bypass airflow passage 56 before being exhausted from the downstream duct portion 50B of the primary duct 50, also providing propulsive thrust. The HP turbine 28, the LP turbine 30, and the jet exhaust nozzle section 32 at least partially define a hot gas path 78 for routing the combustion gases 66 through the turbo-engine 16.

A controller 90 is in communication with the hybrid engine system 9 for controlling aspects of the hybrid engine system 9. For example, the controller 90 is in two-way communication with the hybrid engine system 9 for receiving signals from various sensors and control systems of the hybrid engine system 9 and for controlling components of the hybrid engine system 9, as detailed further below. The controller 90, or components thereof, may be located onboard the hybrid engine system 9, onboard the aircraft, or can be located remote from each of the hybrid engine system 9 and the aircraft. The controller 90 can be a Full Authority Digital Engine Control (FADEC) that controls aspects of the turbine engine 10.

The controller 90 may be a standalone controller or may be part of an engine controller to operate various systems of the hybrid engine system 9. In this embodiment, the controller 90 is a computing device having one or more processors and a memory. The one or more processors can be any suitable processing device, including, but not limited to, a microprocessor, a microcontroller, an integrated circuit, a logic device, a programmable logic controller (PLC), an application specific integrated circuit (ASIC), or a Field Programmable Gate Array (FPGA). The memory can include one or more computer-readable media, including, but not limited to, non-transitory computer-readable media, a computer readable non-volatile medium (e.g., a flash memory), a Random Access Memory (RAM), a Read Only Memory (ROM), hard drives, flash drives, or other memory devices.

The memory can store information accessible by the one or more processors, including computer-readable instructions that can be executed by the one or more processors. The instructions can be any set of instructions or a sequence of instructions that, when executed by the one or more processors, cause the one or more processors and the controller 90 to perform operations. The controller 90 and, more specifically, the one or more processors are programmed or configured to perform these operations, such as the operations discussed further below. In some embodiments, the instructions can be executed by the one or more processors to cause the one or more processors to complete any of the operations and functions for which the controller 90 is configured, as will be described further below. The instructions can be software written in any suitable programming language or can be implemented in hardware. Additionally, or alternatively, the instructions can be executed in logically or virtually separate threads on the processors. The memory can further store data that can be accessed by the one or more processors.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

The turbine engine 10 depicted in FIG. 1 is by way of example only. In other illustrative embodiments, the turbine engine 10 may have any other suitable configuration. For example, in other illustrative embodiments, the fan 38 may be configured in any other suitable manner (e.g., as a fixed pitch fan) and further may be supported using any other suitable fan frame configuration. The turbine engine 10 may also be an indirect drive engine having a gearbox that transfers torque and power from the LP shaft 36 to the fan shaft 45 for adjusting the rotational speed of the fan shaft 45 relative to the LP shaft 36. Moreover, in other illustrative embodiments, any other suitable number or configuration of compressors, turbines, shafts, or a combination thereof may be provided. In still other illustrative embodiments, aspects of the present disclosure may be incorporated into any other suitable turbine engine, such as, for example, turbofan engines, propfan engines, or turboprop engines.

The hybrid engine system 9 also includes a plurality of part-span inlet guide vanes 100. The plurality of part-span inlet guide vanes 100 is provided between the upstream duct portion 50A and the mid-stream duct portion 50C. In particular, the plurality of part-span inlet guide vanes 100 is provided upstream of the fan section 14. The plurality of part-span inlet guide vanes 100 operates as the variable inlet 60 to alter the volume of air 58 reaching the fan section 14.

The plurality of part-span inlet guide vanes 100 is rotatable about an inlet guide vane pitch axis 101 to change a pitch of the plurality of part-span inlet guide vanes 100. In particular, rotating the plurality of part-span inlet guide vanes 100 in such a way controls an amount and a direction of the volume of air 58 flowing towards the fan section 14. In this way, the hybrid engine system 9 can change the pitch of the plurality of part-span inlet guide vanes 100 to engage or to disengage the fan 38, to control the rotation of the fan 38 without the use of a clutch or a transmission. For example, the plurality of part-span inlet guide vanes 100 can change a turning angle into the fan blades 40 such that the fan 38 does not pump airflow as intended (e.g., the inlet airflow is aligned to the axial direction without a circumferential angle). The fan blades 40 in turn do not transfer power to the volume of air 58 while the turbo-engine 16 and, specifically, the LP turbine 30 is still making shaft power as if the fan 38 were functioning as aerodynamically designed. As a result, the fan blades 40 draw less power from the turbo-engine 16, and the power generated by the turbo-engine 16 is available to the electrical power generator 102 instead. The plurality of part-span inlet guide vanes 100 applies an intentional mistuning of fan aerodynamics to a portion of the volume of air 58 passing into the bypass airflow passage 56. An inner radial portion of the fan blades 40 operates as designed independent of the positions of the plurality of part-span inlet guide vanes 100 and pressurizes the volume of air 58 entering the turbo-engine 16. As the fan 38 is not pressurizing and driving as much airflow through the bypass airflow passage 56, the forward thrust produced by the fan 38 is reduced. A radial extent of the plurality of part-span inlet guide vanes 100 is configured by considering both the power removed from the LP compressor 22 and the power transferred to the electrical power generator 102 as well as the amount of the volume of air 58 available to engage or disengage the fan blades 40.

The plurality of part-span inlet guide vanes 100 can also be configured to generate pre-swirling of the incoming volume of air 58 approaching the fan blades 40 in a favorable manner, such as pre-swirling the incoming volume of air 58 in the direction of rotation of the fan 38. For example, pre-swirling an outer radial portion of the volume of air 58 that passes between the plurality of part-span inlet guide vanes 100 can reduce flow separation losses or shock losses, or both, on the fan blades 40. This enables the fan 38 to operate at higher fan tip speeds with less efficiency loss. The plurality of part-span inlet guide vanes 100 can also be configured to reduce turbulence levels of an inner radial portion of the volume of air 58 that passes through the variable inlet 60 at a radial inboard location.

When the hybrid engine 9 is configured to operate in the power generation mode, the plurality of part-span inlet guide vanes 100 can be rotated and oriented to produce an aerodynamically unfavorable inlet airflow angle to the fan 38, to reduce the fan power to the volume of air 58, so that mechanical power is transferred from the turbine engine 10 to the electrical power generator 102. When the hybrid engine system 9 is configured to operate in thrust mode, the plurality of part-span inlet guide vanes 100 can be rotated and oriented to be opened, to increase the amount of airflow passing between the plurality of part-span inlet guide vanes 100 towards the fan section 14 to enable the turbine engine 10 to generate thrust.

The plurality of part-span inlet guide vanes 100 can include a single airfoil shape along a span of the plurality of part-span inlet guide vanes 100. In some embodiments, the plurality of part-span inlet guide vanes 100 can include a plurality of airfoil shapes along the span of the plurality of part-span inlet guide vanes 100 such that an aerodynamic shape of the plurality of part-span inlet guide vanes 100 varies along the span of the plurality of part-span inlet guide vanes 100. Stated another way, a chord line of the plurality of part-span inlet guide vanes 100, a camber line of the plurality of part-span inlet guide vanes 100, turning angles of the plurality of part-span inlet guide vanes 100, and the like, can vary along the span of the plurality of part-span inlet guide vanes 100 in the radial direction R. For example, the plurality of part-span inlet guide vanes 100 can include a first airfoil shape from a tip of the plurality of part-span inlet guide vanes 100 to a mid-span of the plurality of part-span inlet guide vanes 100, and a second airfoil shape from the mid-span to the root of the plurality of part-span inlet guide vanes 100. In some embodiments, the plurality of part-span inlet guide vanes 100 can have more than two airfoil shapes along the span of the plurality of part-span inlet guide vanes 100. As an example, in some embodiments, the plurality of part-span inlet guide vanes 100 can include a continuously variable airfoil shape from the tip of the plurality of part-span inlet guide vanes 100 to the root of the plurality of part-span inlet guide vanes 100. In some embodiments, the airfoil shape of the plurality of part-span inlet guide vanes 100 can match an airfoil shape of the fan blades 40 of the fan 38.

Referring still to FIG. 1, the electrical power generator 102 is positioned within the primary duct 50. Specifically, the electrical power generator 102 is disposed within the mid-stream duct portion 50C of the primary duct 50 downstream of the fan 38 in the vicinity of the fan 38. The electrical power generator 102 is mechanically coupled to the fan shaft 45 and is configured to convert at least a portion of mechanical power generated by the turbine engine 10 into electrical power. The electrical power generator 102 can be integrated with the LP compressor 22 of the compressor section 21. The LP compressor 22 of the turbine engine 10 is rotatably connected to the electrical power generator 102. Integrating the electrical power generator 102 with the LP compressor 22 can provide a compact package and a reduction of the overall size of the turbine engine 10.

The hybrid engine system 9 further includes a thermal management system 200 having an auxiliary flow duct 202 positioned radially outward of the primary duct 50, and, in particular, external to the primary duct 50. More specifically, the auxiliary flow duct 202 is a separate structure relative to the primary duct 50. The auxiliary flow duct 202 is fluidly coupled to the primary duct 50 for directing a portion of the airflow 62 therethrough. The thermal management system 200 can include one or more auxiliary flow ducts 202 positioned at discrete circumferential locations about the primary duct 50. In some embodiments, the auxiliary flow duct 202 can be annular about the longitudinal centerline axis 12.

The auxiliary flow duct 202 includes an auxiliary flow duct inlet 204, an auxiliary flow duct outlet 206, and an auxiliary flow duct flow path 208 extending from the auxiliary flow duct inlet 204 to the auxiliary flow duct outlet 206. The auxiliary flow duct inlet 204 extends through the primary duct 50 and is fluidly coupled to the bypass airflow passage 56 at a position axially downstream of the fan 38. In particular, the auxiliary flow duct inlet 204 is positioned downstream of the outlet guide vanes 52. The outlet guide vanes 52 straighten the airflow 62 axially, allowing for the airflow 62, without having swirl, to more efficiently enter into the auxiliary flow duct 202. The auxiliary flow duct outlet 206 extends through the primary duct 50 and is fluidly coupled to the bypass airflow passage 56 at a position axially downstream of the turbine engine 10. In particular, the auxiliary flow duct outlet 206 is positioned axially downstream of the jet exhaust nozzle section 32 such that the combustion gases 66 mix with an air flow through the auxiliary flow duct 202, as detailed further below.

The auxiliary flow duct flow path 208 includes an upstream section 216, an axial section 218, and a downstream section 222. The upstream section 216 extends generally radially at an angle that is greater than zero degrees and less than or equal to ninety degrees with respect to the longitudinal centerline axis 12 from the auxiliary flow duct inlet 204 to the axial section 218. The axial section 218 is substantially parallel with the longitudinal centerline axis 12 and extends from the upstream section 216 to the downstream section 222. The downstream section 222 extends generally radially at an angle that is greater than zero degrees and less than or equal to ninety degrees with respect to the longitudinal centerline axis 12 from the axial section 218 to the auxiliary flow duct outlet 206. For example, the downstream section 222 can extend at an angle of fifteen degrees, thirty degrees, or forty-five degrees with respect to the longitudinal centerline axis 12.

The thermal management system 200 includes a heat exchanger 220 that is disposed in the auxiliary flow duct flow path 208. In particular, the heat exchanger 220 is disposed in the axial section 218. The heat exchanger 220, being disposed in the auxiliary flow duct 202, is not in any way considered to be disposed in the primary duct 50. The heat exchanger 220 is arranged such that an airflow in the auxiliary flow duct flow path 208, such as a diverted airflow 224 described below, flows through the heat exchanger 220 in an axial direction of the heat exchanger 220. The heat exchanger 220 can have any suitable configuration, for example, a plate-fin configuration, tube in cross-flow configuration, an additively-enabled configuration, and the like.

A flow directing device 210 is arranged at the auxiliary flow duct inlet 204 to selectively open the auxiliary flow duct inlet 204 to direct airflow into the auxiliary flow duct flow path 208 and to selectively close the auxiliary flow duct inlet 204, to prevent airflow from flowing into the auxiliary flow duct flow path 208. The flow directing device 210 opens into the bypass airflow passage 56 and is movable between a fully open position 212 directing the airflow 62 into the auxiliary flow duct flow path 208 and blocking the airflow 62 from flowing through the bypass airflow passage 56, and a fully closed position 214 preventing the airflow 62 from entering the auxiliary flow duct 202, such that the airflow 62 continues to flow through bypass airflow passage 56. The flow directing device 210 can also operate at any of a plurality of partially open positions in between the fully open position 212 and the fully closed position 214, to direct a partial amount of the airflow 62 into the auxiliary flow duct flow path 208. In some embodiments, the partially open position of the flow directing device 210 can direct between 25% to 75% of the airflow 62 into the auxiliary flow duct flow path 208. In some embodiments, the partially open position of the flow directing device 210 can direct between 10% to 30% of the airflow 62 into the auxiliary flow duct flow path 208. The flow directing device 210 can be a moveable door that opens, closes, and also acts as a scoop to direct the airflow 62. In some embodiments, the flow directing device 210 can be a hinged door or a sliding door. In some embodiments, the flow directing device 210 can include a valve to open and to close the auxiliary flow duct flow path 208 and a separate scoop.

In operation, the thermal management system 200 controls opening and closing of the flow directing device 210 to direct the airflow 62 through the auxiliary flow duct inlet 204 and into the auxiliary flow duct flow path 208 as the diverted airflow 224. In particular, the controller 90 controls the opening and closing of the flow directing device 210. In particular, the controller 90 controls the flow directing device 210 to move into an open position. In particular, the controller 90 controls the flow directing device 210 to move to the open position when the plurality of part-span inlet guide vanes 100 is positioned to provide a reduced portion of the volume of air 58 to the fan 38, such as when the hybrid engine system 9 is operating in the power generation mode. The open position can be the fully open position 212 or any other position between the fully open position 212 and the fully closed position 214. The controller 90 can also be configured to move the flow directing device 210 into the open position when the hybrid engine system 9 is operating in the thrust mode during forward flight to provide cooling air as needed.

The auxiliary flow duct inlet 204 directs the diverted airflow 224 therethrough and into the heat exchanger 220. The heat exchanger 220 converts the diverted airflow 224 into a conditioned airflow 225. The conditioned airflow 225 has a different temperature relative to the diverted airflow 224. The conditioned airflow 225 can have a lower temperature than the diverted airflow 224. In some embodiments, the conditioned airflow 225 can, instead, have a higher temperature than the diverted airflow 224. The heat exchanger 220 is fluidly coupled to the electrical power generator 102 via a flow path 226 to provide the conditioned airflow 225 to the electrical power generator 102. The heat exchanger 220 is also fluidly coupled to the electrical power generator 102 via a flow path 228 to receive a return airflow 227 from the electrical power generator 102. The heat exchanger 220 discharges the return airflow 227 as a heat exchanger discharge 230. The heat exchanger discharge 230 flows through the downstream section 222 and through the auxiliary flow duct outlet 206 into the primary duct 50. In particular, the heat exchanger discharge 230 flows into the primary duct 50 at a location downstream of the jet exhaust nozzle section 32 and upstream of the downstream duct portion 50B. In the primary duct 50, the heat exchanger discharge 230 mixes with the combustion gases 66 and is exhausted out of the primary duct 50 through the downstream duct portion 50B.

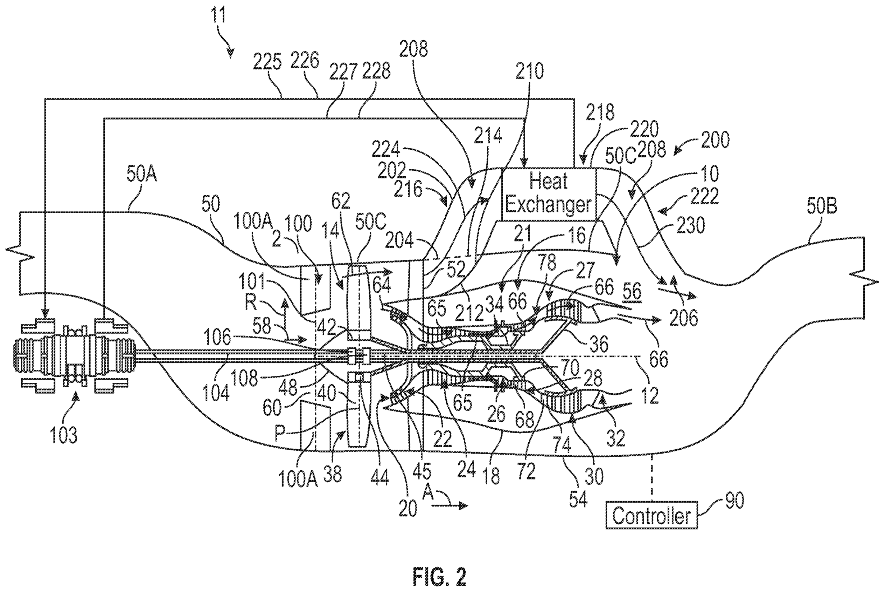

FIG. 2 is a schematic, cross-sectional diagram of a hybrid engine system 11, taken along the longitudinal centerline axis 12 of the hybrid engine system 11, including the turbine engine 10, an electrical power generator 103, and the thermal management system 200, according to another embodiment. The hybrid engine system 11 is similar to the hybrid engine system 9 as depicted in FIG. 1. Elements shared between the hybrid engine system 11 and the hybrid engine system 9 will be referred to using the same element numbers and the description of those elements provided above for FIG. 1 is also applicable to FIG. 2.

The hybrid engine system 11 includes the same thermal management system 200 as the hybrid engine system 9 as shown in FIG. 1. In the hybrid engine system 11 of FIG. 2, the electrical power generator 103 is located external to the primary duct 50, instead of being located within the primary duct 50, as depicted in the hybrid engine system 9 of FIG. 1. In particular, the electrical power generator 103 can be located external to the upstream duct portion 50A. The electrical power generator 103 is coupled to the fan shaft 45 via the transmission shaft 104. The electrical power generator 103 is aligned with the longitudinal centerline axis 12 of the turbine engine 10. In an embodiment, the electrical power generator 103 can be radially offset to the longitudinal centerline axis 12. A rotation of the fan shaft 45 is transmitted to the transmission shaft 104, which, then, provides mechanical power to the electrical power generator 103. The transmission shaft 104 can be the same as the fan shaft 45. In some embodiments, the transmission shaft 104 and the fan shaft 45 can be separate shafts.

The electrical power generator 103 can be integrated with the LP compressor 22 of the turbine engine 10. The LP compressor 22 is rotatably connected to the electrical power generator 103. A clutch 106 can be provided for mechanically decoupling the LP shaft 36 from the electrical power generator 103. This configuration can be used to eliminate parasitic torque, or losses due to inefficiencies, from electrical power generator 103 on the turbine engine 10. Eliminating parasitic torque can be useful during operation in the thrust mode and power from the electrical power generator 103 is not needed. Additionally, the mechanical coupling of the LP shaft 36 to the electrical power generator 103 can include a gearbox 108 such that a rotation speed of the electrical power generator 103 is different from that of the LP compressor 22.

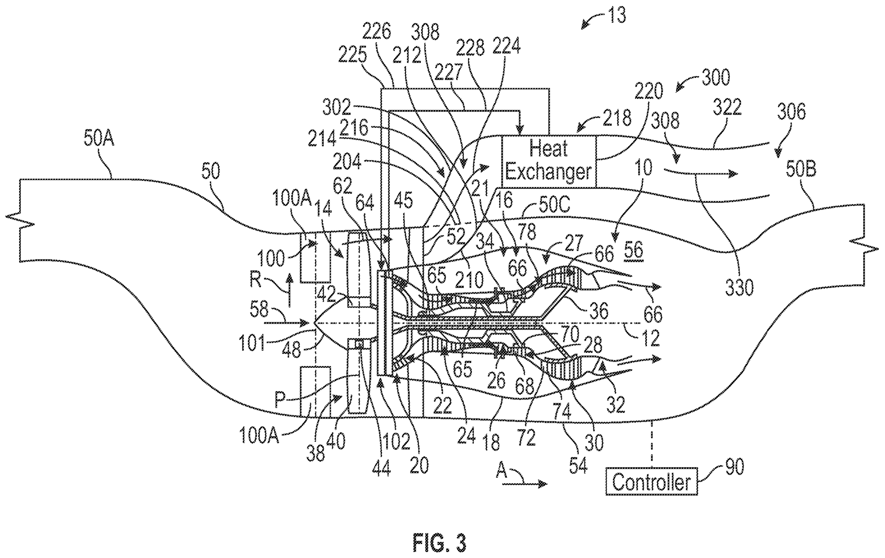

FIG. 3 is a schematic, cross-sectional diagram of a hybrid engine system 13, taken along the longitudinal centerline axis 12 of the hybrid engine system 13, including the turbine engine 10, the electrical power generator 102, and a thermal management system 300, according to another embodiment. The hybrid engine system 13 is similar to the hybrid engine system 9 depicted in FIG. 1. Elements shared between the hybrid engine system 13 and the hybrid engine system 9 will be referred to using the same element numbers and the description of those elements provided above for FIG. 1 is also applicable to FIG. 3.

The thermal management system 300 includes an auxiliary flow duct 302 that is a separate structure relative to the primary duct 50. The auxiliary flow duct 302 includes the auxiliary flow duct inlet 204, an auxiliary flow duct outlet 306, the upstream section 216, the axial section 218, and a downstream section 322. The downstream section 322 extends in a generally similar direction as the axial section 218, extending substantially parallel with the longitudinal centerline axis 12 to the auxiliary flow duct outlet 306. The auxiliary flow duct outlet 306 does not connect to the primary duct 50 such that an auxiliary flow duct flow path 308 does not intersect with the combustion gases 66. Instead, the auxiliary flow duct outlet 306 is positioned external to the primary duct 50 to direct a heat exchanger discharge 330 to ambient air (i.e., air external to the engine), separate from the combustion gases 66. For example, the auxiliary flow duct outlet 306 can be located through a fuselage of an aircraft on which the hybrid engine system 13 is mounted. Keeping the heat exchanger discharge 330 in a separate path as the bypass airflow passage 56 in the primary duct 50 contributes to a reduction in forward thrust. As an example, the auxiliary flow duct outlet 306 can eject the heat exchanger discharge 330 in an upward direction or a downward direction, such that the heat exchanger discharge 330 does not contribute to the forward thrust.

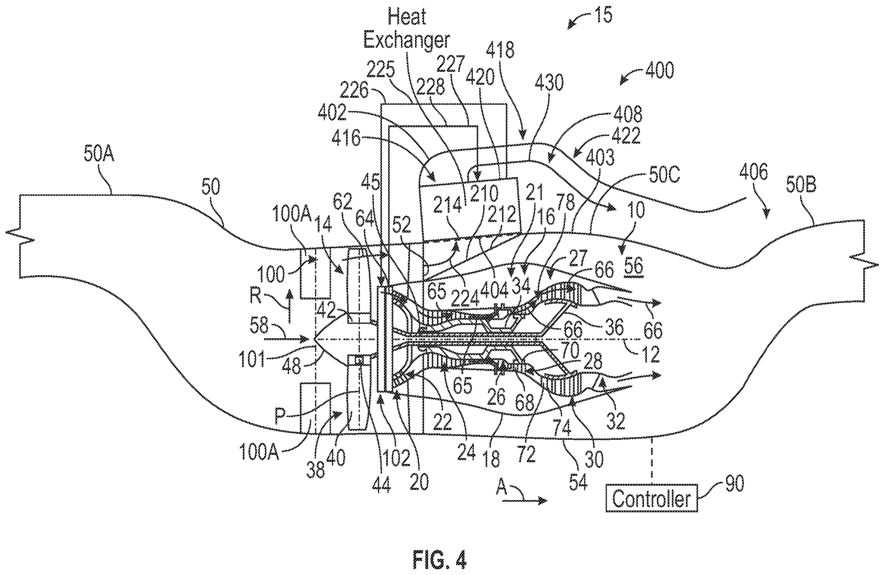

FIG. 4 is a schematic, cross-sectional diagram of a hybrid engine system 15, taken along the longitudinal centerline axis 12 of the hybrid engine system 15, including the turbine engine 10, the electrical power generator 102, and a thermal management system 400, according to another embodiment. The hybrid engine system 15 is similar to the hybrid engine system 9 depicted in FIG. 1. Elements shared between the hybrid engine system 15 and the hybrid engine system 9 will be referred to using the same element numbers and the description of those elements provided above for FIG. 1 is also applicable to FIG. 4.

The thermal management system 400 includes an auxiliary flow duct 402 positioned radially outward of the primary duct 50, and, in particular, external to the primary duct 50, and fluidly coupled to the primary duct 50 for directing a portion of the airflow 62 therethrough. The auxiliary flow duct 402 includes a radially inner duct surface that is defined by a duct outer surface 403 of the primary duct 50. The auxiliary flow duct 402 includes an auxiliary flow duct inlet 404 and an auxiliary flow duct outlet 406, and an auxiliary flow duct flow path 408 extending between the auxiliary flow duct inlet 404 and the auxiliary flow duct outlet 406. The auxiliary flow duct outlet 406 forms an outlet radially outward of the primary duct 50 separate from the downstream duct portion 50B. In an embodiment, the auxiliary flow duct outlet 406 can extend through the primary duct 50 and be fluidly coupled to the bypass airflow passage 56 at a position axially downstream of the turbine engine 10.

The auxiliary flow duct flow path 408 includes an upstream section 416, an axial section 418, and a downstream section 422. The upstream section 416 extends generally radially at an angle between zero to ninety degrees with respect to the longitudinal centerline axis 12 from the auxiliary flow duct inlet 404 to the axial section 418. The axial section 418 is substantially parallel with the longitudinal centerline axis 12 and extends from the upstream section 416 to the downstream section 422. The downstream section 422 extends at a variable angle that generally follows a curvature of the primary duct 50 from the axial section 418 to the auxiliary flow duct outlet 406.

The thermal management system 400 includes a heat exchanger 420 that is positioned at the upstream section 416. In particular, the heat exchanger 420 is positioned directly downstream of, and adjacent to, the auxiliary flow duct inlet 404 such that diverted airflow 224 directed by the flow directing device 210 flows through the heat exchanger 420 in a radial direction with respect to the longitudinal centerline axis 12.

In operation, the diverted airflow 224 flows through the auxiliary flow duct inlet 404 and flows radially into, and through, the heat exchanger 420. The conditioned airflow 225 is routed to the electrical power generator 102 as noted above. The heat exchanger 420 discharges the return airflow 227 as heat exchanger discharge 430. The heat exchanger discharge 430 flows through the axial section 418 and flows into the downstream section 422. The heat exchanger discharge 430 is exhausted at the auxiliary flow duct outlet 406. In an embodiment, the auxiliary flow duct outlet 406 can eject the heat exchanger discharge 430 in an upward direction or a downward direction, such that the heat exchanger discharge 430 does not contribute to thrust. The configuration of integrating the duct outer surface 403 of the primary duct 50 as part of the auxiliary flow duct 402 and positioning the heat exchanger 420 for radial flow allows for the auxiliary flow duct 402 to have a lower profile and reduces an overall engine envelope of the hybrid engine system 15.

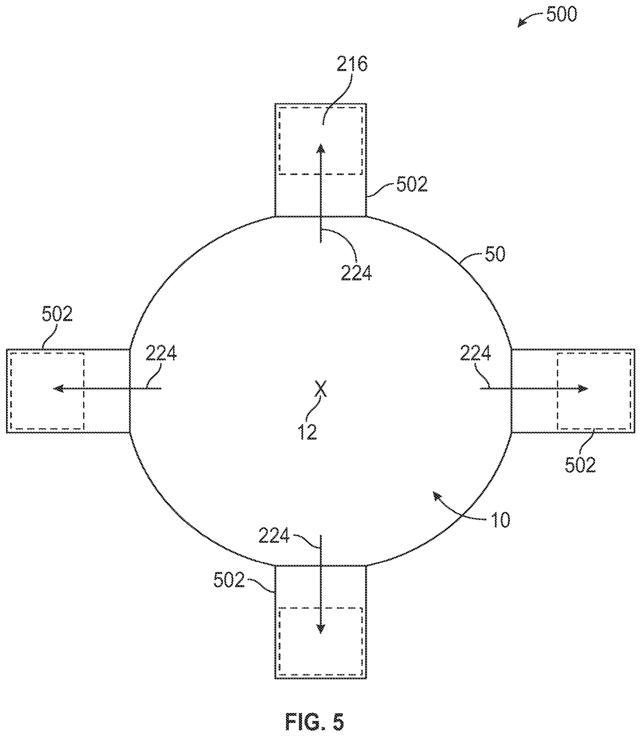

FIG. 5 is a cross-sectional view of the hybrid engine system 9, taken along line 5-5 of FIG. 1, according to an aspect of the present disclosure. A thermal management system 500 includes a plurality of auxiliary flow ducts 502 spaced circumferentially about the primary duct 50. The plurality of auxiliary flow ducts 502 is a separate structure relative to the primary duct 50. The plurality of auxiliary flow ducts 502 can be any of the auxiliary flow ducts detailed herein. As depicted in FIG. 5, four auxiliary flow ducts 502 are arranged on the primary duct 50, with the plurality of auxiliary flow ducts 502 located at an angular location of zero, ninety, one hundred eighty, and two hundred seventy degrees on the primary duct 50, respectively. In an embodiment, a number of auxiliary flow ducts 502 and the angular location at which the auxiliary flow ducts 502 are positioned can depend on an available engine bay envelope. As an example, the plurality of auxiliary flow ducts 502 can reside at ninety degrees and one hundred eighty degrees. The plurality of auxiliary flow ducts 502 can include auxiliary flow ducts 502 at any circumferential location about the primary duct 50.

The thermal management systems 200, 300, 400, and 500 discussed herein provide cooling to the electrical power generator 102 of the hybrid engine systems 9, 13, and 15, and to the electrical power generator 103 of the hybrid engine system 11, respectively. Together with the plurality of part-span inlet guide vanes 100, the thermal management systems 200, 300, 400, and 500 reduce turbofan thrust when desired, such as during a power generation mode for STOVL or VTOL takeoff and for landing. Placing the heat exchanger 220 in the auxiliary flow duct 202 avoids the arrangement where the heat exchanger 220 is placed in the bypass airflow passage 56, which can compromise available forward thrust and engine efficiency when operating in the thrust mode. Further, the auxiliary flow duct 202 requires minimal modifications to existing structures of the primary duct 50, thus simplifying manufacturing processes and implementation, and reducing cost. Additionally, in embodiments such as that depicted in FIG. 3, ejecting the heat exchanger discharge 330 in controlled radial directions may provide additional vehicle attitude control.

Further aspects are provided by the subject matter of the following clauses.

A hybrid engine system includes a primary duct, a turbine engine disposed within the primary duct, the turbine engine including a fan section, a compressor section, a combustion section, and a turbine section having a shaft coupled to the compressor section, an electrical power generator mechanically coupled to the shaft, the electrical power generator being configured to convert at least a portion of mechanical power generated by the turbine engine into electrical power, and a thermal management system including an auxiliary flow duct fluidly coupled to the primary duct to receive a flow of air from the primary duct, the auxiliary flow duct being positioned radially outward of the primary duct, and a heat exchanger disposed in the auxiliary flow duct for cooling the flow of air from the primary duct.

The hybrid engine system of the preceding clause, the heat exchanger being fluidly coupled to the electrical power generator to provide a flow of conditioned air to cool the electrical power generator.

The hybrid engine system of any preceding clause, the heat exchanger being fluidly coupled to the electrical power generator to receive a return airflow from the electrical power generator.

The hybrid engine system of any preceding clause, further including a flow path of conditioned airflow from the heat exchanger to the electrical power generator in order to cool the electrical power generator.

The hybrid engine system of any preceding clause, further including a flow path of return airflow from the electrical power generator to the heat exchanger to exhaust conditioned airflow used to cool the electrical power generator.

The hybrid engine system of any preceding clause, the auxiliary flow duct including an auxiliary flow duct inlet fluidly coupled to the primary duct at a position axially downstream of the fan section, an auxiliary flow duct outlet downstream of the turbine engine, and an auxiliary flow duct flow path extending between the auxiliary flow duct inlet to the auxiliary flow duct outlet, the auxiliary flow duct inlet directing the flow of air from the primary duct into the auxiliary flow duct flow path, the auxiliary flow duct flow path directs the flow of air through the heat exchanger and towards the auxiliary flow duct outlet, and the auxiliary flow duct outlet directs the flow of air from the heat exchanger out of the auxiliary flow duct.

The hybrid engine system of any preceding clause, the auxiliary flow duct flow path including an upstream section extending from the auxiliary flow duct inlet at an angle greater than zero degrees with respect to a longitudinal centerline axis of the turbine engine, an axial section extending from the upstream section substantially parallel with the longitudinal centerline axis, and a downstream section extending from the axial section to the auxiliary flow duct outlet.

The hybrid engine system of any preceding clause, further including a plurality of part-span inlet guide vanes disposed upstream of the turbine engine within the primary duct, the plurality of part-span inlet guide vanes being rotatable to control an amount of airflow and a direction of the airflow towards the fan section.

The hybrid engine system of any preceding clause, the plurality of part-span inlet guide vanes being configured to be closed to reduce the amount of airflow passing between the plurality of part-span inlet guide vanes towards the fan section to transfer power to the electrical power generator.

The hybrid engine system of any preceding clause, the plurality of part-span inlet guide vanes being configured to be opened to increase the amount of airflow passing between the plurality of part-span inlet guide vanes towards the fan section to enable the turbine engine to generate thrust.

The hybrid engine system of any preceding clause, further including a flow directing device movable between an open position and a closed position, the flow directing device directing the flow of air from the primary duct into the auxiliary flow duct when in the open position.

The hybrid engine system of any preceding clause, the flow directing device including a plurality of partially open positions between the open position and the closed position to vary an amount of the flow of air from the primary duct directed into the auxiliary flow duct.

The hybrid engine system of any preceding clause, further including a controller that selectively moves the flow directing device into the open position or the closed position based on an operation mode of the hybrid engine system.

The hybrid engine system of any preceding clause, the operation mode including a power generation mode in which the electrical power generator generates electrical power, and the controller moves the flow directing device into the open position during the power generation mode, such that the flow directing device allows the flow of air into the auxiliary flow duct.

The hybrid engine system of any preceding clause, the operation mode including a thrust mode in which the turbine engine generates thrust, and the controller moves the flow directing device into the closed position during the thrust mode, such that the flow directing device prevents the flow of air from flowing into the auxiliary flow duct.

The hybrid engine system of any preceding clause, the controller moving the flow directing device to a partially open position between the open position and the closed position, such that the flow directing device directs a partial amount of the flow of air into the auxiliary flow duct.

A hybrid engine system includes a primary duct, a turbine engine disposed within the primary duct, the turbine engine including a fan section, a compressor section, a combustion section, and a turbine section having a shaft coupled to the compressor section, an electrical power generator mechanically coupled to the shaft, the electrical power generator being configured to convert at least a portion of mechanical power generated by the turbine engine into electrical power, a plurality of part-span inlet guide vanes disposed upstream of the turbine engine within the primary duct, the plurality of part-span inlet guide vanes being rotatable to control an amount of airflow and a direction of the airflow towards the fan section, and a thermal management system including an auxiliary flow duct fluidly coupled to the primary duct to receive a flow of air from the primary duct, the auxiliary flow duct being positioned radially outward of the primary duct, a heat exchanger disposed in the auxiliary flow duct for cooling the flow of air from the primary duct, and a flow directing device movable between an open position and a closed position, the flow directing device directing the flow of air from the primary duct into the auxiliary flow duct when in the open position.

The hybrid engine system of any preceding clause, the heat exchanger being fluidly coupled to the electrical power generator to provide a flow of conditioned air to cool the electrical power generator and to receive a return airflow from the electrical power generator.

The hybrid engine system of any preceding clause, further including a flow path of conditioned airflow from the heat exchanger to the electrical power generator in order to cool the electrical power generator, and a flow path of return airflow from the electrical power generator to the heat exchanger to exhaust the conditioned airflow used to cool the electrical power generator.

The hybrid engine system of any preceding clause, the auxiliary flow duct including an auxiliary flow duct inlet fluidly coupled to the primary duct at a position axially downstream of the fan section, an auxiliary flow duct outlet downstream of the turbine engine, and an auxiliary flow duct flow path extending between the auxiliary flow duct inlet to the auxiliary flow duct outlet, the auxiliary flow duct inlet directing the flow of air from the primary duct into the auxiliary flow duct flow path, the auxiliary flow duct flow path directs the flow of air through the heat exchanger and towards the auxiliary flow duct outlet, and the auxiliary flow duct outlet directs the flow of air from the heat exchanger out of the auxiliary flow duct.

The hybrid engine system of any preceding clause, further including a controller that selectively moves the flow directing device into the open position or the closed position based on an operation mode of the hybrid engine system.

The hybrid engine system of any preceding clause, the operation mode including a power generation mode in which the electrical power generator generates electrical power, and the controller moves the flow directing device into the open position during the power generation mode, such that the flow directing device allows the flow of air into the auxiliary flow duct.

The hybrid engine system of any preceding clause, the operation mode including a thrust mode in which the turbine engine generates thrust, and the controller moves the flow directing device into the closed position during the thrust mode, such that the flow directing device prevents the flow of air from flowing into the auxiliary flow duct.

The hybrid engine system of any preceding clause, wherein the auxiliary flow duct flow path follows a shape of the primary engine duct.

The hybrid engine system of any preceding clause, wherein the electrical power generator is integrated with the compressor section of the turbine engine.

The hybrid engine system of any preceding clause, wherein the electrical power generator is located outside of the primary engine duct and upstream of the turbine engine.

The hybrid engine system of any preceding clause, wherein the auxiliary flow duct outlet is arranged to exhaust the flow of conditioned air in a substantially upward direction to reduce an amount of thrust generated by the hybrid engine system.

The hybrid engine system of any preceding clause, wherein the auxiliary flow duct outlet is arranged to exhaust the flow of conditioned air in a substantially downward direction to reduce an amount of thrust generated by the hybrid engine system.

The hybrid engine system of any preceding clause, further including a part-span inlet guide vane disposed upstream of the fan section, the part-span inlet guide vane including inlet guide vanes rotatable to control an amount and a direction of an inlet airflow towards the fan section.

The hybrid engine system of any preceding clause, wherein the controller is configured to selectively close the part-span inlet guide vane during operation in the power generation mode.

The hybrid engine system of any preceding clause, wherein flow directing device is configured to be in the open position when the part-span inlet guide vane is in a closed position.

The hybrid engine system of any preceding clause, wherein the part-span inlet guide vane is shaped to provide a swirl to the inlet airflow in a direction of rotation of the fan section.

The hybrid engine system of any preceding clause, wherein an aerodynamic shape of the inlet guide vanes of the part-span inlet guide vane varies along a length of the inlet guide vanes.

The hybrid engine system of any preceding clause, wherein the part-span inlet guide vane is shaped to deswirl the inlet airflow during operation in the power generation mode.

The hybrid engine system of any preceding clause, wherein the heat exchanger is disposed in the axial section.

The hybrid engine system of any preceding clause, wherein the flow directing device is arranged to open radially inwardly into the primary engine duct to direct the flow of air from the primary duct.

The hybrid engine system of any preceding clause, wherein the flow of air in the auxiliary flow duct flow path flows through the auxiliary flow duct outlet into the primary engine duct and mixes with combustion gases in the primary engine duct.

The hybrid engine system of any preceding clause, wherein the auxiliary flow duct includes an auxiliary flow duct inlet fluidly coupled to the primary engine duct at a position axially downstream of the fan section, an auxiliary flow duct outlet positioned external to the primary engine duct to exhaust the flow of air to ambient, and an auxiliary flow duct flow path extending between the auxiliary flow duct inlet to the auxiliary flow duct outlet.

The hybrid engine system of any preceding clause, wherein the auxiliary flow duct includes an upstream section extending at an angle greater than zero degrees and less than or equal to ninety degrees with respect to the longitudinal centerline axis, an axial section extending substantially parallel with the longitudinal centerline axis, and a downstream section extending substantially parallel with the longitudinal centerline axis.

The hybrid engine system of any preceding clause, wherein the auxiliary flow duct outlet is arranged to exhaust the flow of air in a direction to reduce an amount of thrust generated by the hybrid engine system.

The hybrid engine system of any preceding clause, wherein the heat exchanger is disposed at the auxiliary flow duct inlet, and the flow of air flows through the heat exchanger in a radial direction.

The hybrid engine system of any preceding clause, further including an auxiliary duct wall positioned radially outward of the primary engine duct, the auxiliary flow duct being formed between the auxiliary duct wall and an outer surface of the primary engine duct.

The hybrid engine system of any preceding clause, further including a plurality of the thermal management systems positioned annularly around the longitudinal centerline axis.

A thermal management system for a hybrid engine system, the hybrid engine system including a primary duct, a turbine engine disposed within the primary duct, the turbine engine including a fan section, a compressor section, a combustion section, and a turbine section having a shaft coupled to the compressor section, and an electrical power generator mechanically coupled to the shaft, the thermal management system including an auxiliary flow duct positioned radially outward of the primary duct, the auxiliary flow duct being fluidly coupled to the primary duct to receive a flow of air from the primary duct, and a heat exchanger disposed in the auxiliary flow duct for cooling the flow of air from the primary duct.

The thermal management system of the preceding clause, wherein the heat exchanger is fluidly coupled to the electrical power generator to provide a flow of conditioned air to cool the electrical power generator.

The thermal management system of any preceding clause, wherein the heat exchanger is fluidly coupled to the electrical power generator to receive a return airflow from the electrical power generator.

The thermal management system of the preceding clause, further including a flow path of conditioned airflow from the heat exchanger to the electrical power generator in order to cool the electrical power generator.

The thermal management system of the preceding clause, further including a flow path of return airflow from the electrical power generator to the heat exchanger to exhaust conditioned airflow used to cool the electrical power generator.

The thermal management system of any preceding clause, wherein the auxiliary flow duct defines an auxiliary flow duct inlet fluidly coupled to the primary duct at a position axially downstream of the fan section, an auxiliary flow duct outlet positioned downstream of the turbine engine, and an auxiliary flow duct flow path extending between the auxiliary flow duct inlet to the auxiliary flow duct outlet, wherein the auxiliary flow duct inlet directs the flow of air from the primary duct into the auxiliary flow duct flow path, the auxiliary flow duct flow path directs the flow of air through the heat exchanger and towards the auxiliary flow duct outlet, and the auxiliary flow duct outlet directs the flow of air from the heat exchanger out of the auxiliary flow duct.

The thermal management system of any preceding clause, wherein the auxiliary flow duct flow path includes an upstream section extending from the auxiliary flow duct inlet at an angle greater than zero degrees with respect to a longitudinal centerline axis of the turbine engine, an axial section extending from the upstream section substantially parallel with the longitudinal centerline axis, and a downstream section extending from the axial section to the auxiliary flow duct outlet.

The thermal management system of any preceding clause, further including a plurality of part-span inlet guide vanes disposed upstream of the turbine engine within the primary duct, the plurality of part-span inlet guide vanes being rotatable to control an amount of airflow and a direction of the airflow towards the fan section.

The thermal management system of any preceding clause, wherein the plurality of part-span inlet guide vanes is configured to be closed to reduce the amount of airflow passing between the plurality of part-span inlet guide vanes towards the fan section, and thereby increase an amount of power available to be transferred to the electrical power generator.

The thermal management system of any preceding clause, wherein the plurality of part-span inlet guide vanes is configured to be opened to increase the amount of airflow passing between the plurality of part-span inlet guide vanes towards the fan section.

The thermal management system of any preceding clause, further comprising a flow directing device movable between an open position and a closed position, the flow directing device directing the flow of air from the primary duct into the auxiliary flow duct when in the open position.

The thermal management system of any preceding clause, wherein the flow directing device includes a plurality of partially open positions between the open position and the closed position to vary an amount of the flow of air from the primary duct directed into the auxiliary flow duct.

The thermal management system of any preceding clause, further comprising a controller that selectively moves the flow directing device into the open position or the closed position based on an operation mode of the hybrid engine system.

The thermal management system of any preceding clause, wherein the operation mode includes a power generation mode in which the electrical power generator generates electrical power, and the controller moves the flow directing device into the open position during the power generation mode, such that the flow directing device allows the flow of air into the auxiliary flow duct.

The thermal management system of any preceding clause, wherein the operation mode includes a thrust mode in which the turbine engine generates thrust, and the controller moves the flow directing device into the closed position during the thrust mode, such that the flow directing device prevents the flow of air from flowing into the auxiliary flow duct.

The thermal management system of any preceding clause, wherein the controller moves the flow directing device to a partially open position between the open position and the closed position, such that the flow directing device directs a partial amount of the flow of air into the auxiliary flow duct.

A hybrid engine system comprising: a primary duct; a turbine engine disposed within the primary duct, the turbine engine including a fan section, a compressor section, a combustion section, and a turbine section having a shaft coupled to the compressor section; an electrical power generator mechanically coupled to the shaft, the electrical power generator being configured to convert at least a portion of mechanical power generated by the turbine engine into electrical power; and a thermal management system comprising: an auxiliary flow duct fluidly coupled to the primary duct to receive a flow of air from the primary duct, the auxiliary flow duct positioned radially outward of the primary duct; and a heat exchanger disposed in the auxiliary flow duct for cooling the flow of air from the primary duct.

The hybrid engine system of any preceding clause, further comprising a flow path of conditioned airflow from the heat exchanger to the electrical power generator in order to cool the electrical power generator.

The hybrid engine system of any preceding clause, further comprising a flow path of return airflow from the electrical power generator to the heat exchanger to exhaust conditioned airflow used to cool the electrical power generator.

The hybrid engine system of any preceding clause, wherein the auxiliary flow duct defines: an auxiliary flow duct inlet fluidly coupled to the primary duct at a position axially downstream of the fan section; an auxiliary flow duct outlet positioned downstream of the turbine engine; and an auxiliary flow duct flow path extending between the auxiliary flow duct inlet to the auxiliary flow duct outlet, wherein the auxiliary flow duct inlet directs the flow of air from the primary duct into the auxiliary flow duct flow path, the auxiliary flow duct flow path directs the flow of air through the heat exchanger and towards the auxiliary flow duct outlet, and the auxiliary flow duct outlet directs the flow of air from the heat exchanger out of the auxiliary flow duct.

The hybrid engine system of any preceding clause, wherein the auxiliary flow duct flow path includes: an upstream section extending from the auxiliary flow duct inlet at an angle greater than zero degrees with respect to a longitudinal centerline axis of the turbine engine; an axial section extending from the upstream section substantially parallel with the longitudinal centerline axis; and a downstream section extending from the axial section to the auxiliary flow duct outlet.

The hybrid engine system of any preceding clause, further comprising a plurality of part-span inlet guide vanes disposed upstream of the turbine engine within the primary duct, the plurality of part-span inlet guide vanes being rotatable to control an amount of airflow and a direction of the airflow towards the fan section.

The hybrid engine system of any preceding clause, wherein the plurality of part-span inlet guide vanes is configured to be closed to reduce the amount of airflow passing between the plurality of part-span inlet guide vanes towards the fan section, and, thereby, to increase an amount of power available to be transferred to the electrical power generator.

The hybrid engine system of any preceding clause, wherein the plurality of part-span inlet guide vanes is configured to be opened to increase the amount of airflow passing between the plurality of part-span inlet guide vanes towards the fan section.

The hybrid engine system of any preceding clause, further comprising a flow directing device movable between an open position and a closed position, the flow directing device directing the flow of air from the primary duct into the auxiliary flow duct when in the open position.

The hybrid engine system of any preceding clause, wherein the flow directing device includes a plurality of partially open positions between the open position and the closed position to vary an amount of the flow of air from the primary duct directed into the auxiliary flow duct.

The hybrid engine system of any preceding clause, further comprising a controller that selectively moves the flow directing device into the open position or the closed position based on an operation mode of the hybrid engine system.

The hybrid engine system of any preceding clause, wherein the operation mode includes a power generation mode in which the electrical power generator generates electrical power, and the controller moves the flow directing device into the open position during the power generation mode, such that the flow directing device allows the flow of air into the auxiliary flow duct.

The hybrid engine system of any preceding clause, wherein the operation mode includes a thrust mode in which the turbine engine generates thrust, and the controller moves the flow directing device into the closed position during the thrust mode, such that the flow directing device prevents the flow of air from flowing into the auxiliary flow duct.

The hybrid engine system of any preceding clause, wherein the controller moves the flow directing device to a partially open position between the open position and the closed position, such that the flow directing device directs a partial amount of the flow of air into the auxiliary flow duct.

A hybrid engine system comprising: a primary duct; a turbine engine disposed within the primary duct, the turbine engine including a fan section, a compressor section, a combustion section, and a turbine section having a shaft coupled to the compressor section; an electrical power generator mechanically coupled to the shaft, the electrical power generator being configured to convert at least a portion of mechanical power generated by the turbine engine into electrical power; a plurality of part-span inlet guide vanes disposed upstream of the turbine engine within the primary duct, the plurality of part-span inlet guide vanes being rotatable to control an amount of airflow and a direction of the airflow towards the fan section; and a thermal management system comprising: an auxiliary flow duct fluidly coupled to the primary duct to receive a flow of air from the primary duct, the auxiliary flow duct positioned radially outward of the primary duct; a heat exchanger disposed in the auxiliary flow duct for cooling the flow of air from the primary duct; and a flow directing device movable between an open position and a closed position, the flow directing device directing the flow of air from the primary duct into the auxiliary flow duct when in the open position.

The hybrid engine system of any preceding clause, further comprising a flow path of conditioned airflow from the heat exchanger to the electrical power generator in order to cool the electrical power generator, and a flow path of return airflow from the electrical power generator to the heat exchanger to exhaust the conditioned airflow used to cool the electrical power generator.

The hybrid engine system of any preceding clause, wherein the auxiliary flow duct defines: an auxiliary flow duct inlet fluidly coupled to the primary duct at a position axially downstream of the fan section; an auxiliary flow duct outlet positioned downstream of the turbine engine; and an auxiliary flow duct flow path extending between the auxiliary flow duct inlet to the auxiliary flow duct outlet, wherein the auxiliary flow duct inlet directs the flow of air from the primary duct into the auxiliary flow duct flow path, the auxiliary flow duct flow path directs the flow of air through the heat exchanger and towards the auxiliary flow duct outlet, and the auxiliary flow duct outlet directs the flow of air from the heat exchanger out of the auxiliary flow duct.

The hybrid engine system of any preceding clause, further comprising a controller that selectively moves the flow directing device into the open position or the closed position based on an operation mode of the hybrid engine system.

The hybrid engine system of any preceding clause, wherein the operation mode includes a power generation mode in which the electrical power generator generates electrical power, and the controller moves the flow directing device into the open position during the power generation mode, such that the flow directing device allows the flow of air into the auxiliary flow duct.

The hybrid engine system of any preceding clause, wherein the operation mode includes a thrust mode in which the turbine engine generates thrust, and the controller moves the flow directing device into the closed position during the thrust mode, such that the flow directing device prevents the flow of air from flowing into the auxiliary flow duct.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A hybrid engine system (9, 11, 13, 15) comprising:
a primary duct (50);
a turbine engine (10) disposed within the primary duct (50), the turbine engine (10) including a fan section (14), a compressor section (21), a combustion section (26), and a turbine section (27) having a shaft (34, 36) coupled to the compressor section (21);
an electrical power generator (102, 103) mechanically coupled to the shaft (34, 36), the electrical power generator (102, 103) being configured to convert at least a portion of mechanical power generated by the turbine engine (10) into electrical power; and
a thermal management system (200, 300, 400, 500) comprising:
an auxiliary flow duct (202, 302, 402, 502) fluidly coupled to the primary duct (50) to receive a flow of air from the primary duct (50), the auxiliary flow duct (202, 302, 402, 502) being positioned radially outward of the primary duct (50); and
a heat exchanger (220, 420) disposed in the auxiliary flow duct (202, 302, 402, 502) for cooling the flow of air from the primary duct (50).

2. The hybrid engine system (9, 11, 13, 15) of claim 1, further comprising a flow path (226) of conditioned airflow (225) from the heat exchanger (220, 420) to the electrical power generator (102, 103) in order to cool the electrical power generator (102, 103).

3. The hybrid engine system (9, 11, 13, 15) of any preceding claim, further comprising a flow path (228) of return airflow (227) from the electrical power generator (102, 103) to the heat exchanger (220, 420) to exhaust conditioned airflow (225) used to cool the electrical power generator (102, 103).

4. The hybrid engine system (9, 11, 13, 15) of any preceding claim, wherein the auxiliary flow duct (202, 302, 402, 502) includes:
an auxiliary flow duct inlet (204, 404) fluidly connected to the primary duct (50) at a position axially downstream of the fan section (14);
an auxiliary flow duct outlet (206, 306, 406) downstream of the turbine engine (10); and
an auxiliary flow duct flow path (208, 308, 408) extending between the auxiliary flow duct inlet (204, 404) to the auxiliary flow duct outlet (206, 306, 406), wherein the auxiliary flow duct inlet (204, 404) directs the flow of air from the primary duct (50) into the auxiliary flow duct flow path (208, 308, 408), the auxiliary flow duct flow path (208, 308, 408) directs the flow of air through the heat exchanger (220, 420) and towards the auxiliary flow duct outlet (206, 306, 406), and the auxiliary flow duct outlet (206, 306, 406) directs the flow of air from the heat exchanger (220, 420) out of the auxiliary flow duct (202, 302, 402, 502).

5. The hybrid engine system (9, 11, 13, 15) of claim 4, wherein the auxiliary flow duct flow path (208, 308, 408) includes:
an upstream section (216, 416) extending from the auxiliary flow duct inlet (204, 404) at an angle greater than zero degrees with respect to a longitudinal centerline axis (12) of the turbine engine (10);
an axial section (218, 418) extending from the upstream section (216, 416) substantially parallel with the longitudinal centerline axis (12); and
a downstream section (222, 322, 422) extending from the axial section (218, 418) to the auxiliary flow duct outlet (206, 306, 406).

6. The hybrid engine system (9, 11, 13, 15) of any preceding claim, further comprising a plurality of part-span inlet guide vanes (100) disposed upstream of the turbine engine (10) within the primary duct (50), the plurality of part-span inlet guide vanes (100) being rotatable to control an amount of airflow (62) and a direction of the airflow (62) towards the fan section (14).

7. The hybrid engine system (9, 11, 13, 15) of claim 6, wherein the plurality of part-span inlet guide vanes (100) is configured to be closed to reduce the amount of airflow (62) passing between the plurality of part-span inlet guide vanes (100) towards the fan section (14) to transfer power to the electrical power generator (102, 103).

8. The hybrid engine system (9, 11, 13, 15) of claim 6, wherein the plurality of part-span inlet guide vanes (100) is configured to be opened to increase the amount of airflow (62) passing between the plurality of part-span inlet guide vanes (100) towards the fan section (14) to enable the turbine engine (10) to generate thrust.

9. The hybrid engine system (9, 11, 13, 15) of any preceding claim, further comprising a flow directing device (210) movable between an open position and a closed position, the flow directing device (210) directing the flow of air from the primary duct (50) into the auxiliary flow duct (202, 302, 402, 502) when in the open position.

10. The hybrid engine system (9, **11,** 13, 15) of claim 9, wherein the flow directing device (210) includes a plurality of partially open positions between the open position and the closed position to vary an amount of the flow of air from the primary duct (50) directed into the auxiliary flow duct (202, 302, 402, 502).

11. The hybrid engine system (9, **11,** 13, 15) of claim 9 or 10, further comprising a controller (90) that selectively moves the flow directing device (210) into the open position or the closed position based on an operation mode of the hybrid engine system (9, **11,** 13, 15).

12. The hybrid engine system (9, **11,** 13, 15) of claim **11,** wherein the operation mode includes a power generation mode in which the electrical power generator (102, 103) generates electrical power, and the controller (90) moves the flow directing device (210) into the open position during the power generation mode, such that the flow directing device (210) allows the flow of air into the auxiliary flow duct (202, 302, 402, 502).

13. The hybrid engine system (9, **11,** 13, 15) of claim **11,** wherein the operation mode includes a thrust mode in which the turbine engine (10) generates thrust, and the controller (90) moves the flow directing device (210) into the closed position during the thrust mode, such that the flow directing device (210) prevents the flow of air from flowing into the auxiliary flow duct (202, 302, 402, 502).

14. The hybrid engine system (9, **11,** 13, 15) of claim **11,** wherein the controller (90) moves the flow directing device (210) to a partially open position between the open position and the closed position, such that the flow directing device (210) directs a partial amount of the flow of air into the auxiliary flow duct (202, 302, 402, 502).

15. The hybrid engine system (9, 11, 13, 15) of any preceding claim, further comprising:
a plurality of part-span inlet guide vanes (100) disposed upstream of the turbine engine (10) within the primary duct (50), the plurality of part-span inlet guide vanes (100) being rotatable to control an amount of airflow (62) and a direction of the airflow (62) towards the fan section (14); and
a flow directing device (210) movable between an open position and a closed position, the flow directing device (210) directing the flow of air from the primary duct (50) into the auxiliary flow duct (202, 302, 402, 502) when in the open position.
